# EUROPÄISCHE PATENTSCHRIFT

(11) **EP 3 311 012 B1**
(45) Veröffentlichungstag und Bekanntmachung des Hinweises auf die Patenterteilung: **29.05.2019**
(21) Anmeldenummer: 16745613.6
(22) Anmeldetag: 06.06.2016
(51) Int. Cl.: F01N 3/031, F01N 3/20, F01N 11/00, F01N 9/00

(54) **VERFAHREN ZUM BETREIBEN EINES ABGASNACHBEHANDLUNGSSYSTEMS, ABGASNACHBEHANDLUNGSSYSTEM UND BRENNKRAFTMASCHINE MIT EINEM ABGASNACHBEHANDLUNGSSYSTEM**
METHOD FOR OPERATING AN EXHAUST GAS AFTERTREATMENT SYSTEM, EXHAUST GAS AFTERTREATMENT SYSTEM, AND INTERNAL COMBUSTION ENGINE WITH AN EXHAUST GAS AFTERTREATMENT SYSTEM
PROCÉDÉ POUR FAIRE FONCTIONNER UN SYSTÈME DE POST-TRAITEMENT DES GAZ D'ÉCHAPPEMENT, SYSTÈME DE POST-TRAITEMENT DES GAZ D'ÉCHAPPEMENT ET MOTEUR À COMBUSTION INTERNE ÉQUIPÉ D'UN SYSTÈME DE POST-TRAITEMENT DES GAZ D'ÉCHAPPEMENT

(30) Priorität: 17.06.2015 DE 102015211169
(43) Veröffentlichungstag der Anmeldung: 25.04.2018
(73) Patentinhaber: MTU Friedrichshafen GmbH, 88045 Friedrichshafen (DE)
(72) Erfinder: CHATTERJEE, Daniel, 88131 Lindau (DE); RUSCH, Klaus, 88147 Achberg (DE); SCHÄFFNER, Guido, 88263 Horgenzell (DE); WEHLER, Klaus, 88046 Friedrichshafen (DE)
(74) Vertreter: Kordel, Mattias
(86) Internationale Anmeldenummer: PCT/EP2016/000934
(87) Internationale Veröffentlichungsnummer: WO 2016/202435

(56) Entgegenhaltungen:
- WO-A1-2008/127156
- US-A1- 2014 250 865

## Beschreibung

Die Erfindung betrifft ein Verfahren zum Betreiben eines Abgasnachbehandlungssystems, ein Abgasnachbehandlungssystem und eine Brennkraftmaschine mit einem Abgasnachbehandlungssystem.

Unter bestimmten Betriebsbedingungen besteht für Abgasnachbehandlungssysteme die Gefahr einer Schädigung oder Zerstörung, oder es kann zu einer ungewollten Freisetzung von in einem Abgasnachbehandlungselement gespeicherten Substanzen kommen. Um solche Umstände und insbesondere eine Überhitzung von Abgasnachbehandlungselementen eines Abgasnachbehandlungssystems zu vermeiden, ist es grundsätzlich bekannt, Umgehungspfade um Abgasnachbehandlungselemente vorzusehen, wobei typischerweise in solchen Umgehungspfaden ein Stellelement, insbesondere eine Bypassklappe, zur Einstellung eines durch den Umgehungspfad strömenden Abgasmassenstroms vorgesehen ist. Eine Stellung des Stellelements kann dabei beispielweise auf eine stromaufwärts des Abgasnachbehandlungssystems gemessene Temperatur geregelt werden, siehe z.B. US2014250865. Nachteilig hieran ist, dass ein langsames Aufheizen eines Abgasnachbehandlungselements kaum erfassbar ist. Insbesondere sagt die stromaufwärts eines Abgasnachbehandlungselements gemessene Temperatur nichts über den zeitlichen Verlauf eines Temperaturanstiegs in dem Abgasnachbehandlungselement aus. Alternativ ist es möglich, die Stellung des Stellelements auf eine stromabwärts eines Abgasnachbehandlungssystems gemessene Temperatur zu regeln. Nachteilig hierbei ist, dass eine solche Regelung zu träge ist und insbesondere schnell auftretende, zerstörende oder schädigende Ereignisse nicht vermeiden kann. Schließlich ist es auch möglich, eine Schädigung oder Zerstörung eines Abgasnachbehandlungssystems durch motorisches Thermomanagement zu verhindern. Dies ist allerdings nicht unter allen Betriebsbedingungen eines Motors, insbesondere nicht bei schnellem Hochlaufen, möglich.

Der Erfindung liegt die Aufgabe zugrunde, ein Verfahren zum Betreiben eines Abgasnachbehandlungssystems, ein Abgasnachbehandlungssystem und eine Brennkraftmaschine zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen und der Beschreibung.

Die Aufgabe wird insbesondere gelöst, indem ein Verfahren zum Betreiben eines Abgasnachbehandlungssystems geschaffen wird, welches folgende Schritte aufweist: Es wird ein zulässiger Energieeintrag in wenigstens ein Abgasnachbehandlungselement des Abgasnachbehandlungssystems bestimmt. Es wird ein momentaner Energieeintrag in das wenigstens eine Abgasnachbehandlungselement ermittelt, indem wenigstens eine den momentanen Energieeintrag charakterisierende Energieeintragsgröße ermittelt wird, und eine Stelleinrichtung, mittels welcher eine Aufteilung eines Abgasmassenstroms auf das wenigstens eine Abgasnachbehandlungselement einerseits und einen Umgehungspfad um das wenigstens eine Abgasnachbehandlungselement andererseits variierbar ist, wird in Abhängigkeit von dem zulässigen Energieeintrag und in Abhängigkeit von dem momentanen Energieeintrag angesteuert. Durch Bestimmen des zulässigen Energieeintrags kann festgelegt werden, welche Energiemenge - insbesondere welche Energiemenge pro Zeiteinheit - in ein Abgasnachbehandlungselement eingetragen werden darf, ohne dass dieses beschädigt oder zerstört wird. Indem der momentane Energieeintrag ermittelt wird, steht stets eine ausreichende Information zur Verfügung um festzustellen, ob eine Schädigung oder Zerstörung des wenigstens einen Abgasnachbehandlungselements droht. Indem die Stelleinrichtung in Abhängigkeit von dem zulässigen Energieeintrag einerseits und dem momentanen Energieeintrag andererseits angesteuert wird, kann sehr effizient in jedem Betriebspunkt des Abgasnachbehandlungssystems eine Schädigung oder Zerstörung des wenigstens einen Abgasnachbehandlungselements verhindert werden. Anders als bei einer reinen Temperaturerfassung stromaufwärts oder stromabwärts des wenigstens einen Abgasnachbehandlungselements steht mit dem momentanen Energieeintrag eine für die Belastung des Abgasnachbehandlungselements tatsächlich direkt aussagekräftige und relevante Größe zur Verfügung. Dabei zeigt sich auch, dass die in das Abgasnachbehandlungselement eingetragene Energie eine vergleichsweise träge Größe darstellt, die sehr gut geeignet ist, um die Stelleinrichtung in Abhängigkeit hiervon anzusteuern. Demgegenüber ist eine reine Temperaturerfassung deutlich volatiler und weniger geeignet, um eine stabile Steuerung oder Regelung darzustellen.

Unter dem Begriff "Energieeintrag" wird eine Energiemenge verstanden, welche in das wenigstens eine Abgasnachbehandlungselement eingetragen wird. Dabei ist es gemäß einer Ausgestaltung des Verfahrens möglich, dass es sich um eine pro Zeiteinheit eingetragene Energiemenge handelt, sodass der Energieeintrag die Dimension einer Leistung hat. Gemäß einer anderen Ausführungsform des Verfahrens ist es möglich, dass als Energieeintrag eine absolut während eines vorherbestimmten Zeitraums in das wenigstens eine Abgasnachbehandlungselement eingetragene Energie verwendet wird. Beispielsweise ist es in diesem Fall möglich, dass eine pro Zeiteinheit in das wenigstens eine Abgasnachbehandlungselement eingetragene Energiemenge ermittelt und über einen vorherbestimmten Zeitraum integriert wird, um die absolut eingetragene Energiemenge zu erhalten. Sowohl eine pro Zeiteinheit eingetragene Energie als auch eine absolut über einen bestimmten Zeitraum eingetragene Energie sind geeignete Größen, um eine mögliche Schädigung oder Zerstörung des Abgasnachbehandlungselements sicher vorhersagen zu können.

Unter dem Begriff "Energieeintragsgröße" wird eine Größe verstanden, welche für den momentanen Energieeintrag charakteristisch ist, beziehungsweise von welcher der momentane Energieeintrag abhängt. Insbesondere handelt es sich um wenigstens eine Größe oder eine Mehrzahl von Größen, aus denen der momentane Energieeintrag herleitbar, insbesondere berechenbar ist. Es ist möglich, dass - beispielsweise anhand einer Modellrechnung oder Simulation - direkt der momentane Energieeintrag ermittelt wird. In diesem Fall ist die wenigstens eine Energieeintragsgröße unmittelbar der momentane Energieeintrag selbst.

Dass die Stelleinrichtung angesteuert wird, schließt ein, dass für die Stelleinrichtung eine Steuerung oder eine Regelung durchgeführt wird. Eine Steuerung kann beispielsweise durchgeführt werden, wenn der momentane Energieeintrag nicht durch Messung hierfür geeigneter Größen an dem Abgasnachbehandlungselement selbst, sondern vielmehr durch eine Modellrechnung oder Simulation ermittelt wird, sodass keine genaue Kenntnis und insoweit keine Rückkopplung des tatsächlichen momentanen Energieeintrags vorliegt. Eine Regelung kann insbesondere dadurch durchgeführt werden, dass der momentane Energieeintrag anhand von tatsächlich im Bereich des oder an dem Abgasnachbehandlungselement gemessenen Größen ermittelt wird, sodass eine Rückkopplung existiert. Dass die Ansteuerung in Abhängigkeit von dem zulässigen Energieeintrag und dem momentanen Energieeintrag erfolgt, bedeutet insbesondere, dass der momentane Energieeintrag mit dem zulässigen Energieeintrag verglichen wird, wobei die Stelleinrichtung in Abhängigkeit von dem Vergleichsergebnis angesteuert wird. Beispielsweise ist es möglich, dass eine Differenz zwischen dem momentanen Energieeintrag und dem zulässigen Energieeintrag gebildet wird, wobei die Stelleinrichtung in Abhängigkeit von der Differenz angesteuert wird. Beispielsweise ist es möglich, die Stelleinrichtung so anzusteuern, dass ein Hauptteil des Abgasmassenstroms über den Umgehungspfad strömt, wenn der momentane Energieeintrag den zulässigen Energieeintrag überschreitet. Umgekehrt kann die Stelleinrichtung so angesteuert werden, dass ein Hauptteil des Abgasmassenstroms über das wenigstens eine Abgasnachbehandlungselement geführt wird, wenn der momentane Energieeintrag kleiner ist als der zulässige Energieeintrag.

Unter einem Umgehungspfad wird hier insbesondere ein Bypass verstanden, nämlich ein Leitungsabschnitt, der stromaufwärts des wenigstens einen Abgasnachbehandlungselements aus einem Hauptabgaspfad des Abgasnachbehandlungssystems, welcher das wenigstens eine Abgasnachbehandlungselement aufweist, abzweigt, und stromabwärts des wenigstens einen Abgasnachbehandlungselements wieder in den Hauptabgaspfad einmündet.

Die Stelleinrichtung weist vorzugsweise ein Stellelement oder eine Mehrzahl von Stellelementen, insbesondere eine Stellklappe oder eine Mehrzahl von Stellklappen, auf, durch welche der Abgasmassenstrom durch das Abgasnachbehandlungssystem auf das wenigstens eine Abgasnachbehandlungselement einerseits und den Umgehungspfad andererseits aufteilbar ist. Dabei ist bevorzugt eine kontinuierliche Aufteilung auf die verschiedenen Pfade von jeweils 0 % bis 100 % möglich.

Es wird eine Ausführungsform des Verfahrens bevorzugt, die sich dadurch auszeichnet, dass der zulässige Energieeintrag bestimmt wird in Abhängigkeit von wenigstens einem Betriebsparameter des wenigstens einen Abgasnachbehandlungselements. Der zulässige Energieeintrag variiert nämlich insbesondere abhängig von den konkreten Betriebsbedingungen für das wenigstens eine Abgasnachbehandlungselement. Insbesondere wird der zulässige Energieeintrag vorzugsweise in Abhängigkeit von einer Rußbeladung eines als Partikelfilter ausgebildeten Abgasnachbehandlungselements bestimmt. Dabei unterscheidet sich der zulässige Energieeintrag typischerweise abhängig davon, ob eine ein Regenerationsereignis auslösende Rußbeladungsschwelle des Partikelfilters überschritten ist, oder nicht. Ist eine solche vorbestimmte Rußbeladungsschwelle überschritten, soll der Ruß gezündet werden, wozu vorzugsweise ein höherer zulässiger Energieeintrag gesetzt wird, als vor Überschreiten der Rußbeladungsschwelle. Andererseits soll verhindert werden, dass die Rußabbrandreaktion durchgeht, wobei der Partikelfilter thermisch zu hoch belastet würde. Vielmehr soll der Rußabbrand kontinuierlich und zur Vermeidung einer übermäßig hohen thermischen Belastung des Partikelfilters mit einer vorbestimmten, maximalen Abbrandgeschwindigkeit, vorzugsweise gesteuert, erfolgen. Hierzu ist der zulässige Energieeintrag bevorzugt auch im Falle eines Rußabbrands nach oben begrenzt.

Es ist auch möglich, dass der zulässige Energieeintrag bestimmt wird in Abhängigkeit von einer Reduktionsmittelbeladung eines als Katalysator zur selektiven katalytischen Reduktion von Stickoxiden ausgebildeten Abgasnachbehandlungselements. Typischerweise wirkt ein solcher, auch als SCR-Katalysator bezeichneter Katalysator als Speicher für ein Reduktionsmittel, insbesondere für Ammoniak, welches nicht aus dem Katalysator ausgetrieben oder ausgetragen werden soll. Dabei ist ein Austrag oder eine Austreibung des Reduktionsmittels aus dem Katalysator abhängig von dem Energieeintrag in den Katalysator. Je mehr Energie in den Katalysator eingetragen wird, desto stärker wird das Reduktionsmittel aus diesem ausgetrieben. Außerdem ist der Austrag bei gegebenem Energieeintrag höher, je mehr Reduktionsmittel in dem Katalysator gespeichert ist. Daher ist der zulässige Energieeintrag im Sinne einer Verhinderung eines Austrags von Reduktionsmittel abhängig von der Reduktionsmittelbeladung des Katalysators.

Es ist auch möglich, dass der zulässige Energieeintrag bestimmt wird in Abhängigkeit von einer Kohlenwasserstoff-Beladung eines Katalysators, insbesondere eines Oxidationskatalysators oder eines SCR-Katalysators. Dabei zeigt sich, dass in einem Katalysator gespeicherte Kohlenwasserstoffe zwar ausgetrieben, insbesondere ausgeheizt, werden sollen, ohne dass diese dabei jedoch gezündet werden, was ansonsten zu einer thermischen Beschädigung des Katalysators führen könnte. Gerade dies ist jedoch kritisch, da ein Abstand zwischen einer minimalen Temperatur, bei welcher gerade noch ein Austreiben der Kohlenwasserstoffe stattfindet, und einer maximalen Temperatur, bei welcher die ausgetriebenen Kohlenwasserstoffe zünden, vergleichsweise klein ist und insbesondere zwischen 10 K und 20 K beträgt. Daher ist es insbesondere in diesem Fall wichtig, den zulässigen Energieeintrag in Abhängigkeit der Kohlenwasserstoffbeladung des Katalysators geeignet zu wählen.

Gemäß dem Verfahren, wird als Energieeintragsgröße ein Abgasmassenstrom durch das wenigstens eine Abgasnachbehandlungselement und eine Abgastemperatur ermittelt. Es werden somit sowohl der Abgasmassenstrom durch das wenigstens eine Abgasnachbehandlungselement als auch eine Abgastemperatur durch Messung im Bereich des Abgasnachbehandlungselements ermittelt. Der Energieeintrag lässt sich mit hoher Genauigkeit ermitteln, wenn sowohl der Abgasmassenstrom als auch die Abgastemperatur an dem wenigstens einen Abgasnachbehandlungselement ermittelt, insbesondere gemessen werden. Dabei zeigt sich nämlich, dass die Wärmekapazität cₚ von Abgas bei konstantem Druck sehr gut bekannt und im Übrigen auch in guter Näherung über alle Betriebspunkte des Abgasnachbehandlungssystems konstant ist. Kennt man diese Wärmekapazität cₚ und außerdem den Abgasmassenstrom durch das wenigstens eine Abgasnachbehandlungselement sowie die Abgastemperatur, ist hieraus ohne weiteres die pro Zeiteinheit in das wenigstens eine Abgasnachbehandlungselement eingetragene Energie mit hoher Genauigkeit ermittelbar, insbesondere berechenbar. Bevorzugt wird der momentane Energieeintrag aus dem Abgasmassenstrom durch das wenigstens eine Abgasnachbehandlungselement sowie die Abgastemperatur berechnet.

Alternativ oder zusätzlich ist es auch möglich, den momentanen Energieeintrag in das wenigstens eine Abgasnachbehandlungselement direkt aus einer Modellrechnung oder Simulation, einer Kennlinie oder einem Kennfeld zu ermitteln.

Bei einer Ausfuhrungsform des Verfahrens ist vorgesehen, dass die Abgastemperatur stromaufwärts des wenigstens einen Abgasnachbehandlungselements gemessen wird. Bei einer anderen Ausfuhrungsform des Verfahrens ist vorgesehen, dass die Abgastemperatur stromabwärts des wenigstens einen Abgasnachbehandlungselements gemessen wird. Alternativ oder zusätzlich ist bevorzugt vorgesehen, dass die Abgastemperatur in dem wenigstens einen Abgasnachbehandlungselement gemessen wird. Hierzu sind bevorzugt insbesondere Temperatursensoren vorgesehen, wobei ein Temperatursensor stromaufwärts, stromabwärts und/oder in dem wenigstens einen Abgasnachbehandlungselement angeordnet ist. Es ist möglich, dass eine mittlere Abgastemperatur in dem Abgasnachbehandlungselement durch Mittelwertbildung einer vor dem Abgasnachbehandlungselement und einer nach dem Abgasnachbehandlungselement gemessenen Temperatur bestimmt wird. Zusätzlich oder alternativ ist es möglich, dass die von dem Abgasnachbehandlungselement aufgenommene Energie durch Differenzmessung der Abgastemperatur stromaufwärts des Abgasnachbehandlungselements und stromabwärts des Abgasnachbehandlungselements bestimmt wird. Alternativ oder zusätzlich ist es möglich, dass die von dem Abgasnachbehandlungselement aufgenommene Energie anhand der Abgastemperatur aus einem Modell oder einer Simulation des Abgasnachbehandlungselements bestimmt wird.

Es ist auch möglich, dass eine Abgastemperatur nicht gemessen, sondern aus einem Modell oder einer Simulation, oder einem Kennfeld oder einer Kennlinie bestimmt wird, insbesondere aus einem Modell oder einer Simulation einer Brennkraftmaschine, in Kombination mit der das Abgasnachbehandlungssystem betrieben wird. Dabei ist es möglich, dass die Abgastemperatur betriebspunktabhängig mittels eines Modells, einer Simulation, einem Kennfeld oder einer Kennlinie sehr genau bestimmt werden kann.

Es wird auch eine Ausführungsform des Verfahrens bevorzugt, die sich dadurch auszeichnet, dass der Abgasmassenstrom in Abhängigkeit von einem momentanen Betriebszustand einer Brennkraftmaschine, in Kombination mit der das Abgasnachbehandlungssystem betrieben wird, bestimmt wird. Dabei ist es insbesondere möglich, den Abgasmassenstrom anhand einer Modellrechnung, einer Simulation, einem Kennfeld oder einer Kennlinie betriebspunktabhängig zu bestimmen. Alternativ oder zusätzlich ist es möglich, dass der Abgasmassenstrom in Abhängigkeit von einer Druckverlustgröße über dem wenigstens einen Abgasnachbehandlungselement bestimmt wird. Alternativ oder zusätzlich ist es möglich, dass der Abgasmassenstrom in Abhängigkeit von einer Druckverlustgröße über wenigstens einem Stellelement der Stelleinrichtung - insbesondere zusätzlich abhängig von einer momentanen Stellposition, insbesondere einem Stellwinkel, des Stellelements - ermittelt wird. Die Druckverlustgröße wird vorzugsweise bestimmt, indem ein Druck stromaufwärts des Abgasnachbehandlungselements und/oder des Stellelements sowie ein Druck stromabwärts des Abgasnachbehandlungselements und/oder des Stellelements, gemessen werden. Aus diesen Druckwerten kann ein Differenzdruckwert bestimmt werden, welcher als Druckverlustgröße verwendet werden kann. Ist/sind zugleich die Abgastemperatur im Bereich des wenigstens einen Abgasnachbehandlungselements und/oder des Stellelements sowie gegebenenfalls die Stellposition des Stellelements bekannt, ist es ohne weiteres möglich, aus der Druckverlustgröße und der Abgastemperatur den Abgasmassenstrom mit hoher Genauigkeit zu bestimmen. Es ist auch möglich, dass die Druckverlustgröße mittels eines Differenzdrucksensors bestimmt wird.

Die Aufgabe wird auch gelöst, indem ein Abgasnachbehandlungssystem geschaffen wird, welches wenigstens ein Abgasnachbehandlungselement, einen Umgehungspfad um das Abgasnachbehandlungselement, eine Stelleinrichtung, die eingerichtet ist zur Aufteilung eines Abgasmassenstroms auf das wenigstens eine Abgasnachbehandlungselement einerseits und den Umgehungspfad andererseits, und eine Steuereinrichtung aufweist. Dabei weist die Steuereinrichtung ein Bestimmungsmittel zur Bestimmung eines zulässigen Energieeintrags in das wenigstens eine Abgasnachbehandlungselement, ein Ermittlungsmittel zur Ermittlung eines momentanen Energieeintrags in das wenigstens eine Abgasnachbehandlungselement, und ein Ansteuermittel zum Ansteuern der Stelleinrichtung auf. Die Steuereinrichtung ist eingerichtet zur Ansteuerung der Stelleinrichtung in Abhängigkeit von dem zulässigen Energieeintrag und in Abhängigkeit von dem momentanen Energieeintrag. Insbesondere ist die Steuereinrichtung bevorzugt eingerichtet zur Durchführung eines Verfahrens nach einer der zuvor beschriebenen Ausführungsformen. Dabei ergeben sich in Zusammenhang mit dem Abgasnachbehandlungssystem die Vorteile, die bereits in Zusammenhang mit dem Verfahren erläutert wurden.

Es ist möglich, dass die Steuereinrichtung eingerichtet ist, um den zulässigen Energieeintrag und/oder den momentanen Energieeintrag anhand von Modellrechnungen und/oder Simulationen zu bestimmen. Bevorzugt ist die Steuereinrichtung allerdings mit wenigstens einem Sensor wirkverbunden, um den zulässigen Energieeintrag und/oder den momentanen Energieeintrag zu bestimmen. Hierbei handelt es sich vorzugsweise um wenigstens einen Druck- und/oder wenigstens einen Temperatursensor, die insbesondere im Bereich des wenigstens einen Abgasnachbehandlungselements angeordnet sind. Mit geeigneten Drucksensoren kann beispielsweise ohne weiteres eine Rußbeladung eines Partikelfilters - vorzugsweise anhand einer Druckverlustgröße über dem Partikelfilter - bestimmt werden, wobei eine solche Vorgehensweise für sich genommen bekannt ist, sodass hier nicht näher darauf eingegangen wird. In ähnlicher Weise kann eine Drucksensor-Anordnung - wie oben bereits erläutert - genutzt werden, um einen Abgasmassenstrom über das wenigstens eine Abgasnachbehandlungselement zur Ermittlung des momentanen Energieeintrags zu bestimmen.

Bevorzugt ist wenigstens ein Temperatursensor stromaufwärts, stromabwärts und/oder in dem wenigstens einen Abgasnachbehandlungselement angeordnet und mit der Steuereinrichtung wirkverbunden.

Es ist möglich, dass weitere, geeignete Sensoren vorgesehen sind, um beispielsweise eine Reduktionsmittelbeladung eines SCR-Katalysators, und/oder eine Kohlenwasserstoffbeladung eines Oxidationskatalysators oder eines SCR-Katalysators festzustellen.

Das Abgasnachbehandlungssystem weist bevorzugt eine Mehrzahl von Abgasnachbehandlungselementen auf. Insbesondere ist es möglich, dass das Abgasnachbehandlungssystem eine Mehrzahl von verschiedenen Abgasnachbehandlungselementen, beispielsweise einen Partikelfilter, einen Oxidationskatalysator und/oder einen SCR-Katalysator aufweist.

Wenigstens einem ersten Abgasnachbehandlungselement und wenigstens einem zweiten Abgasnachbehandlungselement ist bevorzugt ein separater Umgehungspfad und eine separate Stelleinrichtung zugeordnet. Dabei ist es möglich, dass verschiedenen Gruppen von Abgasnachbehandlungselementen separate Umgehungspfade und separate Stelleinrichtungen zugeordnet sind. Alternativ oder zusätzlich ist es möglich, dass individuell einzelnen Abgasnachbehandlungselementen separate Umgehungspfade und separate Stelleinrichtungen zugeordnet sind. Im Fall einer Zuordnung eines Umgehungspfads und einer Stelleinrichtung zu einer Gruppe von Abgasnachbehandlungselementen kann dabei diese Gruppe sinnvoll gewählt werden, wobei die der Gruppe zugeordneten Abgasnachbehandlungselemente bevorzugt ähnliche Bedingungen für einen zulässigen Energieeintrag aufweisen. Insbesondere ist es möglich, verschiedene, gleichartige Abgasnachbehandlungselemente, beispielsweise eine Mehrzahl von Partikelfiltern, zu einer Gruppe zusammenzufassen, welchen dann gemeinsam ein Umgehungspfad und eine Stelleeinrichtung zugeordnet sind. Sind einzelnen, individuellen Abgasnachbehandlungselementen einzelne, individuelle Umgehungspfade und Stelleinrichtungen zugeordnet, ist es möglich, für jedes dieser einzelnen Abgasnachbehandlungselemente einen individuellen, zulässigen Energieeintrag zu definieren und die Stelleinrichtung entsprechend individuell anzusteuern, wobei jedes Abgasnachbehandlungselement optimal geschont und vor einer Beschädigung oder einer Zerstörung geschützt wird.

Alternativ oder zusätzlich ist es auch möglich, dass ein globaler Umgehungspfad mit einer globalen Stelleinrichtung vorgesehen ist, wobei der Umgehungspfad um alle Abgasnachbehandlungselemente des Abgasnachbehandlungssystems vorgesehen ist. Dies stellt eine zugleich effektive wie ökonomische Lösung dar, weil alle Abgasnachbehandlungselemente mit einem minimalen Aufwand an Kosten und Teilen vor Schädigung und Zerstörung geschützt werden können.

Es wird ein Ausführungsbeispiel des Abgasnachbehandlungssystems bevorzugt, das sich dadurch auszeichnet, dass die Stelleinrichtung genau ein Stellelement zur Aufteilung des Abgasmassenstroms aufweist. Dabei kann es sich beispielsweise um eine Abgasweiche handeln, durch welche der Abgasstrom auf den Hauptabgaspfad über das wenigstens eine Abgasnachbehandlungselement und den Umgehungspfad aufteilbar ist, oder es kann sich um eine Stellklappe in dem Umgehungspfad, insbesondere eine Bypassklappe handeln, durch welche der Umgehungspfad - vorzugsweise kontinuierlich - sperrbar und freigebbar ist.

Alternativ ist es möglich, dass die Stelleinrichtung je ein Stellelement in dem Umgehungspfad und stromaufwärts des Abgasnachbehandlungselements, vorzugsweise stromabwärts einer Abzweigung des Umgehungspfads - in Strömungsrichtung gesehen - vor dem Abgasnachbehandlungselement, aufweist. In diesem Fall sind also zwei Stellelemente vorgesehen, nämlich ein erstes in dem Hauptabgaspfad stromabwärts der Abzweigung des Umgehungspfads, und ein zweites in dem Umgehungspfad, wodurch eine sehr feinfühlige und genaue Aufteilung des Abgasmassenstroms möglich ist. Besonders bevorzugt ist dabei vorgesehen, dass die beiden Stelleinrichtungen miteinander gegenläufig gekoppelt sind, insbesondere dergestalt, dass die eine Stelleinrichtung in dem Maß öffnet, in welchem die andere Stelleinrichtung schließt. Dadurch kann gewährleistet werden, dass die Stellungen der Stellelemente stets passenden Anteilen des Abgasmassenstroms entsprechen, die sich zu 100 % addieren.

Das wenigstens eine Stellelement, welches die Stelleinrichtung aufweist, ist vorzugsweise als Klappe ausgebildet. Alternativ ist es möglich, dass das wenigstens eine Stellelement als Ventil oder in anderer geeigneter Weise ausgebildet ist.

Schließlich wird die Aufgabe gelöst, indem eine Brennkraftmaschine geschaffen wird, welche ein Abgasnachbehandlungssystem nach einem der zuvor beschriebenen Ausführungsbeispiele aufweist. Dabei verwirklichen sich in Zusammenhang mit der Brennkraftmaschine die Vorteile, die bereits in Zusammenhang mit dem Abgasnachbehandlungssystem und dem Verfahren erläutert wurden.

Vorzugsweise wird als Steuereinrichtung des Abgasnachbehandlungssystems wenigstens ein Steuergerät der Brennkraftmaschine, insbesondere das zentrale Steuergerät der Brennkraftmaschine (engine control unit - ECU) verwendet. Es ist aber auch möglich, dass die Funktionalität der Steuereinrichtung des Abgasnachbehandlungssystems von einer Mehrzahl von Steuergeräten, welche miteinander zusammenwirken, übernommen wird. Dabei kann es sich um Steuergeräte des Abgasnachbehandlungssystems oder der Brennkraftmaschine in engerem Sinne handeln. Es ist auch möglich, dass die Steuereinrichtung vollständig dem Abgasnachbehandlungssystem zugeordnet ist.

Es ist möglich, dass das Verfahren fest in eine elektronische Struktur, insbesondere eine Hardware-Struktur, der Steuereinrichtung implementiert ist. Alternativ oder zusätzlich ist es möglich, dass in die Steuereinrichtung ein Computerprogramprodukt geladen ist, welches Anweisungen aufweist, aufgrund derer das Verfahren durchführbar ist, wenn das Computerprogramprodukt auf der Steuereinrichtung läuft.

Zur Erfindung gehört auch ein Computerprogramprodukt, welches maschinenlesbare Anweisungen aufweist, aufgrund derer eine Ausführungsform des Verfahrens durchführbar ist, wenn das Computerprogramprodukt auf einer Recheneinrichtung, insbesondere auf einer Steuereinrichtung, läuft.

Zur Erfindung gehört auch ein Datenträger, welcher ein solches Computerprogramprodukt aufweist.

Die Brennkraftmaschine ist vorzugsweise als Hubkolbenmotor ausgebildet. Es ist möglich, dass die Brennkraftmaschine zum Antrieb eines Personenkraftwagens, eines Lastkraftwagens oder eines Nutzfahrzeugs eingerichtet ist. Bei einem bevorzugten Ausführungsbeispiel dient die Brennkraftmaschine dem Antrieb insbesondere schwerer Land- oder Wasserfahrzeuge, beispielsweise von Minenfahrzeugen, Zügen, wobei die Brennkraftmaschine in einer Lokomotive oder einem Triebwagen eingesetzt wird, oder von Schiffen. Auch ein Einsatz der Brennkraftmaschine zum Antrieb eines der Verteidigung dienenden Fahrzeugs, beispielsweise eines Panzers, ist möglich. Ein Ausführungsbeispiel der Brennkraftmaschine wird vorzugsweise auch stationär, beispielsweise zur stationären Energieversorgung im Notstrombetrieb, Dauerlastbetrieb oder Spitzenlastbetrieb eingesetzt, wobei die Brennkraftmaschine in diesem Fall vorzugsweise einen Generator antreibt. Auch eine stationäre Anwendung der Brennkraftmaschine zum Antrieb von Hilfsaggregaten, beispielsweise von Feuerlöschpumpen auf Bohrinseln, ist möglich. Weiterhin ist eine Anwendung der Brennkraftmaschine im Bereich der Förderung fossiler Roh- und insbesondere Brennstoffe, beispielswiese Öl und/oder Gas, möglich. Auch eine Verwendung der Brennkraftmaschine im industriellen Bereich oder im Konstruktionsbereich, beispielsweise in einer Konstruktions- oder Baumaschine, zum Beispiel in einem Kran oder einem Bagger, ist möglich. Die Brennkraftmaschine ist vorzugsweise als Dieselmotor, als Benzinmotor, als Gasmotor zum Betrieb mit Erdgas, Biogas, Sondergas oder einem anderen geeigneten Gas, ausgebildet. Insbesondere wenn die Brennkraftmaschine als Gasmotor ausgebildet ist, ist sie für den Einsatz in einem Blockheizkraftwerk zur stationären Energieerzeugung geeignet.

Die Beschreibung des Verfahrens einerseits und des Abgasnachbehandlungssystems sowie der Brennkraftmaschine andererseits sind komplementär zueinander zu verstehen. Merkmale des Abgasnachbehandlungssystems und/oder der Brennkraftmaschine, die explizit oder implizit in Zusammenhang mit dem Verfahren erläutert wurden, sind bevorzugt einzeln oder miteinander kombiniert Merkmale eines bevorzugten Ausführungsbeispiels des Abgasnachbehandlungssystems und/oder der Brennkraftmaschine. Verfahrensschritte, die explizit oder implizit in Zusammenhang mit dem Abgasnachbehandlungssystem und/oder der Brennkraftmaschine beschrieben wurden, sind bevorzugt einzeln oder miteinander kombiniert Schritte einer bevorzugten Ausführungsform des Verfahrens. Dieses zeichnet sich bevorzugt durch wenigstens einen Verfahrensschritt aus, welcher durch wenigstens ein Merkmal eines erfindungsgemäßen oder bevorzugten Ausführungsbeispiels des Abgasnachbehandlungssystems und/oder der Brennkraftmaschine bedingt ist. Die Brennkraftmaschine und/oder das Abgasnachbehandlungssystem zeichnet/zeichnen sich bevorzugt durch wenigstens ein Merkmal aus, welches durch wenigstens einen Schritt einer erfindungsgemäßen oder bevorzugten Ausführungsform des Verfahrens bedingt ist.

Die Erfindung wird im Folgenden anhand der Zeichnung näher erläutert. Dabei zeigen:
- Figur 1: eine schematische Darstellung eines ersten Ausführungsbeispiels einer Brennkraftmaschine mit einem ersten Ausführungsbeispiel eines Abgasnachbehandlungssystems;
- Figur 2: eine schematische Darstellung eines zweiten Ausführungsbeispiels des Abgasnachbehandlungssystems, und
- Figur 3: eine schematische Darstellung eines dritten Ausführungsbeispiels des Abgasnachbehandlungssystems.

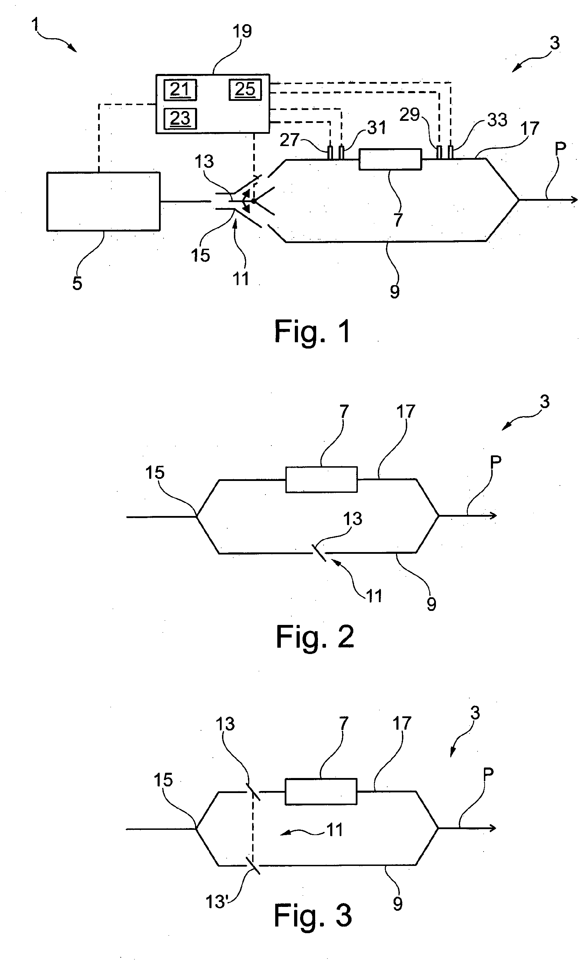

**Fig. 1** zeigt eine schematische Darstellung eines ersten Ausführungsbeispiels einer Brennkraftmaschine 1 mit einem ersten Ausführungsbeispiel eines Abgasnachbehandlungssystems 3. Dabei ist ein Motorblock 5 der Brennkraftmaschine 1 derart mit dem Abgasnachbehandlungssystem 3 verbunden, dass Abgas von dem Motorblock 5 über das Abgasnachbehandlungssystem 3 zu einem Auslass, insbesondere einem Auspuff führbar ist, was hier schematisch durch einen Pfeil P dargestellt ist. Das Abgasnachbehandlungssystem 3 weist wenigstens ein Abgasnachbehandlungselement 7 auf, welches beispielsweise als Partikelfilter, als SCR-Katalysator, oder als Oxidationskatalysator ausgebildet sein kann. Es ist möglich, dass das Abgasnachbehandlungssystem 3 mehr als ein Abgasnachbehandlungselement 7 aufweist.

Das Abgasnachbehandlungssystem 3 weist außerdem einen Umgehungspfad 9 um das wenigstens eine Abgasnachbehandlungselement 7 auf, der insbesondere als Bypass ausgebildet ist. Dabei ist es möglich, dass der Umgehungspfad 9 zur Umgehung genau eines Abgasnachbehandlungselements 7 vorgesehen ist, oder dass er zur Umgehung einer Gruppe von Abgasnachbehandlungselementen 7 oder aber auch aller Abgasnachbehandlungselemente 7 des Abgasnachbehandlungssystems 3 vorgesehen ist.

Das Abgasnachbehandlungssystem 3 weist außerdem eine Stelleinrichtung 11 auf, die eingerichtet ist zur Aufteilung eines Abgasmassenstroms auf das wenigstens eine Abgasnachbehandlungselement 7 einerseits und den Umgehungspfad 9 andererseits. Bei dem hier dargestellten Ausführungsbeispiel weist die Stelleinrichtung 11 genau ein Stellelement 13 auf, welches hier als Abgasweiche in einer Abzweigung 15, an der sich ein das Abgasnachbehandlungselement 7 umfassender Hauptabgaspfad 17 und der Umgehungspfad 9 trennen, vorgesehen ist. Dabei ist das Stellelement 13 bevorzugt als entlang eines schematisch angedeuteten Doppelpfeils schwenkbare Klappe ausgebildet, durch welche der Abgasmassenstrom auf den Hauptabgaspfad 17 einerseits und den Umgehungspfad 9 andererseits aufteilbar ist.

Das Abgasnachbehandlungssystem 3 weist außerdem eine Steuereinrichtung 19 auf. Diese weist ihrerseits ein Bestimmungsmittel 21 zur Bestimmung eines zulässigen Energieeintrags in das wenigstens eine Abgasnachbehandlungselement 7, ein Ermittlungsmittel 23 zur Ermittlung eines momentanen Energieeintrags in das wenigstens eine Abgasnachbehandlungselement 7, und ein Ansteuermittel 25 zum Ansteuern der Stelleinrichtung 11 auf. Dabei ist die Steuereinrichtung 19 eingerichtet, um die Stelleinrichtung 11 in Abhängigkeit von dem zulässigen Energieeintrag und von dem momentanen Energieeintrag in das wenigstens eine Abgasnachbehandlungselement 7 anzusteuern, insbesondere um die Stelleinrichtung 11 und bevorzugt eine Stellposition des Stellelements 13 zu steuern oder zu regeln.

Dabei ist es möglich, dass im Rahmen einer Regelung der zulässige Energieeintrag als Sollwert verwendet wird, wobei der momentane Energieeintrag als Ist-Wert verwendet wird.

Es ist möglich, dass die Steuereinrichtung 19 als Motorsteuergerät oder als zentrales Steuergerät der Brennkraftmaschine 1 ausgebildet ist. Insbesondere ist die Steuereinrichtung 19 bevorzugt zur Ermittlung eines momentanen Betriebszustands der Brennkraftmaschine 1 mit dem Motorblock 5 wirkverbunden.

Das Ermittlungsmittel 23 ist vorzugsweise eingerichtet, um den momentanen Energieeintrag durch Ermitteln von wenigstens einer den momentanen Energieeintrag charakterisierenden Energieeintragsgröße zu ermitteln. Dabei wird als Energieeintragsgröße ein Abgasmassenstrom durch das wenigstens eine Abgasnachbehandlungselement 7 und eine Abgastemperatur im Bereich des Abgasnachbehandlungselements 7, vorzugsweise der Abgasmassenstrom und die Abgastemperatur, verwendet. Eine Wärmekapazität cₚ bei konstantem Druck des Abgases ist es vorzugsweise als Konstante in der Steuereinrichtung 19, insbesondere in dem Ermittlungsmittel 23 hinterlegt.

Das Bestimmungsmittel ist vorzugsweise eingerichtet, um den zulässigen Energieeintrag in Abhängigkeit von wenigstens einem Betriebsparameter des wenigstens einen Abgasnachbehandlungselements 7 zu bestimmen.

Zur Ermittlung eines Betriebsparameters des wenigstens einen Abgasnachbehandlungselements und/oder zur Bestimmung einer Energieeintragsgröße weist das Abgasnachbehandlungssystem 3 vorzugsweise eine Mehrzahl von Sensoren auf, insbesondere einen ersten Drucksensor 27 stromaufwärts des Abgasnachbehandlungselements 7 und einen zweiten Drucksensor 29 stromabwärts des Abgasnachbehandlungselements 7. Mittels der Drucksensoren 27, 29 ist insbesondere eine Druckverlustgröße über das Abgasnachbehandlungselement 7 ermittelbar. Statt zweier separater Drucksensoren 27, 29 ist es auch möglich, einen Differenzdrucksensor zu verwenden.

Aus der Druckverlustgröße ist beispielsweise als Betriebsparameters des Abgasnachbehandlungselements 7 eine Rußbeladung eines Partikelfilters ermittelbar. Zusätzlich oder alternativ ist aus der Druckverlustgröße - vorzugsweise unter Heranziehung der Abgastemperatur im Bereich des Abgasnachbehandlungselements 7 - ein Abgasmassenstrom über das Abgasnachbehandlungselement 7 ermittelbar.

Vorzugsweise ist ein erster Temperatursensor 31 stromaufwärts des Abgasnachbehandlungselements 7 vorgesehen, wobei ein zweiter Temperatursensor 32 stromabwärts des Abgasnachbehandlungselements 7 vorgesehen ist. Anhand der Messwerte der Temperatursensoren 31, 32 ist beispielsweise ein Mittelwert für die Abgastemperatur in dem Abgasnachbehandlungselement 7 ermittelbar. Alternativ oder zusätzlich ist es auch möglich, einen in das Abgasnachbehandlungselement 7 integrierten Temperatursensor zu verwenden, oder einen Temperatursensor, der derart an dem Abgasnachbehandlungselement 7 angeordnet ist, dass er eine Abgastemperatur in dem Abgasnachbehandlungselement 7 misst. Anhand einer Temperaturdifferenz zwischen einer Messstelle stromaufwärts des Abgasnachbehandlungselements 7 und einer Messstelle stromabwärts des Abgasnachbehandlungselements 7, insbesondere also anhand einer mit den Temperatursensoren 31, 32 erfassten Temperaturdifferenz ist es möglich, eine tatsächlich von dem Abgasnachbehandlungselement 7 aufgenommene Energie über den Wärmeverlust in dem Abgas zu ermitteln.

Aus dem Abgasmassenstrom durch das Abgasnachbehandlungselement 7, der bekannten Wärmekapazität cₚ des Abgases bei konstantem Druck und der Abgastemperatur ist es außerdem möglich, den momentanen Energieeintrag in das Abgasnachbehandlungselement 7 zu ermitteln. Insbesondere kann so ohne weiteres eine pro Zeiteinheit in das Abgasnachbehandlungselement 7 eingetragene Energie ermittelt werden. Durch Integration über einen vorbestimmten Zeitraum ist so auch eine in dem vorbestimmten Zeitraum absolut in das Abgasnachbehandlungselement 7 eingetragene Energie ermittelbar.

Die Steuereinrichtung 19 ist bevorzugt mit der Stelleinrichtung 11, insbesondere mit dem Stelleelement 13, zu deren/dessen Ansteuerung wirkverbunden. Die Steuereinrichtung 19 ist außerdem vorzugsweise mit den Drucksensoren 27, 29 und den Temperatursensoren 31, 33 wirkverbunden.

Wird eine der bevorzugt zur Ermittlung des momentanen Energieeintrags verwendeten Energieeintragsgrößen, also der Abgasmassenstrom und die Abgastemperatur nicht durch Messung bestimmt, ist es möglich, diese anhand einer Modellrechnung oder Simulation insbesondere für den Motorblock 5, zu gewinnen oder aus einem Kennfeld oder einer Kennlinie der Brennkraftmaschine 1 auszulesen.

Wichtig ist, dass im Rahmen des hier vorgeschlagenen Verfahrens nicht nur eine reine Abgastemperatursteuerung der Stelleinrichtung verwendet wird, sondern vielmehr der Energieeintrag in das Abgasnachbehandlungselement 7 ermittelt wird, der tatsächlich aussagekräftig ist für eine mögliche Schädigung oder Zerstörung des Abgasnachbehandlungselements 7.

**Fig. 2** zeigt eine schematische Darstellung eines zweiten Ausführungsbeispiels des Abgasnachbehandlungssystems 3. Gleiche und funktionsgleiche Elemente sind mit gleichen Bezugszeichen versehen, sodass insofern auf die vorangegangene Beschreibung verwiesen wird. Hier weist die Stelleinrichtung 11 genau ein vorzugsweise als Stellklappe ausgebildetes Stellelement 13 auf, welches in dem Umgehungspfad 9 angeordnet ist. Das Stellelement 13 ist insbesondere als Bypassklappe ausgebildet.

**Fig. 3** zeigt eine schematische Darstellung eines dritten Ausführungsbeispiels des Abgasnachbehandlungssystems 3. Gleiche und funktionsgleiche Elemente sind mit gleichen Bezugszeichen versehen, sodass insofern auf die vorangegangene Beschreibung verwiesen wird. Bei diesem Ausführungsbeispiel weist die Stelleinrichtung 11 je ein Stellelement 13, 13' in dem Umgehungspfad 9 einerseits und in dem Hauptabgaspfad 17 andererseits, stromaufwärts des Abgasnachbehandlungselements 7 und stromabwärts der Abzweigung 15, auf. Dabei sind die beiden Stellelemente 13, 13' bevorzugt gegenläufig miteinander gekoppelt, sodass anhand ihrer Stellpositionen oder Stellwinkel stets der Abgasmassenstrom eindeutig in Anteile aufgeteilt werden kann, die sich insgesamt zu 100 % addieren. Dabei ist es in diesem Fall auch möglich, den Abgasmassenstrom durch das Abgasnachbehandlungselement 7 zu bestimmen, indem der Abgasmassenstrom - vorzugsweise über eine Druckverlustgröße - über das Stellelement 13' in dem Umgehungspfad 9 bestimmt wird. Ist nämlich dieser Abgasmassenstrom bekannt, und ist zugleich die Stellposition des Stellelements 13' bekannt, kann hieraus wiederum auf die Stellposition des Stellelements 13 in dem Hauptabgaspfad 17 geschlossen werden, woraus dann wiederum auf den Abgasmassenstrom durch das Abgasnachbehandlungselement 7 geschlossen werden kann. Aus Bauraumgründen kann es sinnvoll sein, eine Sensorik zur Ermittlung eines Abgasmassenstroms nur im Bereich des dem Umgehungspfad 9 zugeordneten Stellelements 13' vorzusehen.

Insgesamt zeigt sich, dass mittels des Verfahrens, des Abgasnachbehandlungssystems 3 und der Brennkraftmaschine 1 in sehr genauer Weise ein Energieeintrag in das Abgasnachbehandlungselement 7 ermittelt werden kann, sodass es möglich ist, bei für das Abgasnachbehandlungssystem 3 gefährlichen Betriebsbedingungen Abgas über den Umgehungspfad 9 zu leiten und dabei die Stelleinrichtung 11 so anzusteuern, dass das Abgasnachbehandlungselement 7 nach einer kritischen Situation geregelt freigegeben oder bei Eintreten einer kritischen Situation geregelt gesperrt werden kann. Dabei ist noch zu beachten, dass insbesondere im marinen Bereich Bypässe um eine Abgasnachbehandlung ohnehin gefordert werden, sodass keine Zusatzkomponenten zur Durchführung des Verfahrens erforderlich sind. Es ist lediglich nötig, eine Ansteuerung der Stelleinrichtung 11 so einzurichten, dass diese anhand des momentanen Energieeintrags und des zulässigen Energieeintrags angesteuert, insbesondere geregelt wird. Insgesamt kann so eine übermäßige Alterung, Schädigung oder Zerstörung von Abgasnachbehandlungselementen verhindert werden. Außerdem kann eine ungewollte Emission eingespeicherter Substanzen aus einem Abgasnachbehandlungselement verhindert werden.

## Patentansprüche

1. Verfahren zum Betreiben eines Abgasnachbehandlungssystems (3), mit folgenden Schritten:
- Bestimmen eines zulässigen Energieeintrags in wenigstens ein Abgasnachbehandlungselement (7) des Abgasnachbehandlungssystems (3);
- Ermitteln eines momentanen Energieeintrags in das wenigstens eine Abgasnachbehandlungselement (7) durch Ermitteln von wenigstens einer den momentanen Energieeintrag charakterisierenden Energieeintragsgröße, und
- Ansteuern einer eine Aufteilung eines Abgasmassenstroms auf das wenigstens eine Abgasnachbehandlungselement (7) einerseits und einen um das wenigstens eine Abgasnachbehandlungselement (7) führenden Umgehungspfad (9) andererseits variierenden Stelleinrichtung (11) in Abhängigkeit von dem zulässigen Energieeintrag und von dem momentanen Energieeintrag, wobei
- als Energieeintragsgrößen ein Abgasmassenstrom durch das wenigstens eine Abgasnachbehandlungselement (7) und eine Abgastemperatur ermittelt werden.

2. Verfahren nach Anspruch 1, **dadurch gekennzeichnet, dass** der zulässige Energieeintrag bestimmt wird in Abhängigkeit von wenigstens einem Betriebsparameter des wenigstens einen Abgasnachbehandlungselement (7), insbesondere in Abhängigkeit von einer Rußbeladung eines Partikelfilters, einer Reduktionsmittelbeladung eines SCR-Katalysators, und/oder einer Kohlenwasserstoff-Beladung eines Katalysators.

3. Verfahren nach einem der vorhergehenden Ansprüche, **dadurch gekennzeichnet, dass** die Abgastemperatur stromaufwärts des wenigstens einen Abgasnachbehandlungselements (7), stromabwärts des wenigstens einen Abgasnachbehandlungselements (7), und/oder in dem wenigstens einen Abgasnachbehandlungselement (7) gemessen wird.

4. Verfahren nach einem der vorhergehenden Ansprüche, **dadurch gekennzeichnet, dass** der Abgasmassenstrom in Abhängigkeit von einem momentanen Betriebszustand einer Brennkraftmaschine (1), in Kombination mit der das Abgasnachbehandlungssystem (3) betrieben wird, in Abhängigkeit von einer Druckverlustgröße über dem wenigstens einen Abgasnachbehandlungselement (7), und/oder in Abhängigkeit von einer Druckverlustgröße über wenigstens einem Stellelement (13,13') der Stelleinrichtung (11) ermittelt wird.

5. Abgasnachbehandlungssystem (3), mit
- wenigstens einem Abgasnachbehandlungselement (7),
- einem Umgehungspfad (9) um das wenigstens eine Abgasnachbehandlungselement (7),
- einer Stelleinrichtung (11), eingerichtet zur Aufteilung eines Abgasmassenstroms auf das wenigstens eine Abgasnachbehandlungselement (7) einerseits und den Umgehungspfad (9) andererseits, und mit
- einer Steuereinrichtung, die ein Bestimmungsmittel (21) zur Bestimmung eines zulässigen Energieeintrags in das wenigstens eine Abgasnachbehandlungselement (7), ein Ermittlungsmittel (23) zur Ermittlung eines momentanen Energieeintrags in das wenigstens eine Abgasnachbehandlungselement (7) und ein Ansteuermittel (25) zum Ansteuern der Stelleinrichtung (11) aufweist, wobei
- die Steuereinrichtung (19) eingerichtet ist zur Ansteuerung der Stelleinrichtung (11) in Abhängigkeit von dem zulässigen Energieeintrag und dem momentanen Energieeintrag, wobei das Ermittlungsmittel (23) eingerichtet ist, um als den momentanen Energieeintrag charakterisierende Energieeintragsgrößen einen Abgasmassenstrom durch das wenigstens eine Abgasnachbehandlungselement (7) und eine Abgastemperatur zu ermitteln.

6. Abgasnachbehandlungssystem (3) nach Anspruch 5, **dadurch gekennzeichnet, dass** das Abgasnachbehandlungssystem (3) eine Mehrzahl von Abgasnachbehandlungselementen (7) aufweist, wobei wenigstens einem ersten Abgasnachbehandlungselement (7) und wenigstens einem zweiten Abgasnachbehandlungselement (7) jeweils ein separater Umgehungspfad (9) und eine separate Stelleinrichtung (11) zugeordnet sind.

7. Abgasnachbehandlungssystem (3) nach einem der Ansprüche 5 und 6, **dadurch gekennzeichnet, dass** die Stelleinrichtung (11) genau ein Stellelement (13,13') zur Aufteilung des Abgasmassenstroms aufweist, oder dass die Stelleinrichtung (11) jeweils ein Stellelement (13,13') in dem Umgehungspfad (9) und stromaufwärts des Abgasnachbehandlungselements (7) aufweist, wobei die Stellelemente (13,13') vorzugsweise gegenläufig miteinander gekoppelt sind.

8. Brennkraftmaschine (1), mit einem Abgasnachbehandlungssystem (3) nach einem der Ansprüche 5 bis 7.

## Claims

1. A method for operating an exhaust gas aftertreatment system (3), having the following steps:
- determining a permissible energy input into at least one exhaust gas aftertreatment element (7) of the exhaust gas aftertreatment system (3) ;
- ascertaining an instantaneous energy input into the at least one exhaust gas aftertreatment element (7) by ascertaining at least one energy input variable which characterizes the instantaneous energy input, and
- actuating an actuation device (11) which varies, on the one hand, a distribution of an exhaust gas mass flow to the at least one exhaust gas aftertreatment element (7) and, on the other hand, a bypass path (9) which leads around the at least one exhaust gas aftertreatment element (7), as a function of the permissible energy input and the instantaneous energy input, wherein
an exhaust gas mass flow through the at least one exhaust gas aftertreatment element (7) and an exhaust gas temperature are ascertained as the energy input variable.

2. Method according to Claim 1, **characterized in that** the permissible energy input is determined as a function of at least one operating parameter of the at least one exhaust gas aftertreatment element (7), in particular as a function of a soot charge of a particle filter, a reducing agent charge of an SCR catalytic converter and/or a hydrocarbon charge of a catalytic converter.

3. Method according to one of the preceding claims, **characterized in that** the exhaust gas temperature is measured upstream of the at least one exhaust gas aftertreatment element (7), downstream of the at least one exhaust gas aftertreatment element (7), and/or in the at least one exhaust gas aftertreatment element (7).

4. Method according to one of the preceding claims, **characterized in that** the exhaust gas mass flow is ascertained as a function of an instantaneous operating state of an internal combustion engine (1) in combination with which the exhaust gas aftertreatment system (3) is operated, as a function of a pressure loss variable across the at least one exhaust gas aftertreatment element (7), and/or as a function of a pressure loss variable across at least one actuation element (13, 13') of the actuation device (11).

5. Exhaust gas aftertreatment system (3), having
- at least one exhaust gas aftertreatment element (7),
- a bypass path (9) around the at least one exhaust gas aftertreatment element (7),
- an actuation device (11), configured to distribute an exhaust gas mass flow to the at least one exhaust gas aftertreatment element (7), on the one hand, and the bypass path (9), on the other, and having
- a control device which has a determining means (21) for determining a permissible energy input into the at least one exhaust gas aftertreatment element (7), an ascertaining means (23) for ascertaining an instantaneous energy input into the at least one exhaust gas aftertreatment element (7), and an actuation means (25) for actuating the actuation device (11), wherein
- the control device (19) is configured to actuate the actuation device (11) as a function of the permissible energy input and the instantaneous energy input, wherein the ascertaining means (23) is configured to ascertain an exhaust gas mass flow through the at least one exhaust gas aftertreatment element (7) and an exhaust gas temperature as energy input variables characterizing the instantaneous energy input.

6. Exhaust gas aftertreatment system (3) according to Claim 6, **characterized in that** the exhaust gas aftertreatment system (3) has a multiplicity of exhaust gas aftertreatment elements (7), wherein at least one first exhaust gas aftertreatment element (7) and at least one second exhaust gas aftertreatment element (7) are each assigned a separate bypass path (9) and a separate actuation device (11).

7. Exhaust gas aftertreatment system (3) according to one of Claims 6 and 7, **characterized in that** the actuation device (11) has precisely one actuation element (13, 13') for distributing the exhaust gas mass flow, or **in that** the actuation device (11) has an actuation element (13, 13') in the bypass path (9) and an actuation element (13, 13') upstream of the exhaust gas aftertreatment element (7), wherein the actuation elements (13, 13') are preferably coupled to one another in opposite directions.

8. Internal combustion engine (1), having an exhaust gas aftertreatment system (3) according to one of Claims 5 to 7.

## Revendications

1. Procédé pour faire fonctionner un système de post-traitement des gaz d'échappement (3), présentant les étapes suivantes:
- déterminer un apport d'énergie admissible dans au moins un élément de post-traitement des gaz d'échappement (7) du système de post-traitement des gaz d'échappement (3);
- déterminer un apport d'énergie instantané dans ledit au moins un élément de post-traitement des gaz d'échappement (7) par la détermination d'au moins une grandeur d'apport d'énergie caractérisant l'apport d'énergie instantané; et
- commander un dispositif de réglage (11) faisant varier une distribution d'un courant massique de gaz d'échappement sur ledit au moins un élément de post-traitement des gaz d'échappement (7) d'une part et un chemin de contournement (9) conduisant autour dudit au moins un élément de post-traitement des gaz d'échappement (7) d'autre part, en fonction de l'apport d'énergie admissible et de l'apport d'énergie instantané, dans lequel
- on détermine comme grandeurs d'apport d'énergie un courant massique de gaz d'échappement à travers ledit au moins un élément de post-traitement des gaz d'échappement (7) et une température des gaz d'échappement.

2. Procédé selon la revendication 1, **caractérisé en ce que** l'on détermine l'apport d'énergie admissible en fonction d'au moins un paramètre de fonctionnement dudit au moins un élément de post-traitement des gaz d'échappement (7), en particulier en fonction d'une charge de suie d'un filtre à particules, d'une charge d'agent réducteur d'un catalyseur SCR, et/ou d'une charge d'hydrocarbures d'un catalyseur.

3. Procédé selon l'une quelconque des revendications précédentes, **caractérisé en ce que** l'on mesure la température des gaz d'échappement en amont dudit au moins un élément de post-traitement des gaz d'échappement (7), en aval dudit au moins un élément de post-traitement des gaz d'échappement (7) et/ou dans ledit au moins un élément de post-traitement des gaz d'échappement (7).

4. Procédé selon l'une quelconque des revendications précédentes, **caractérisé en ce que** l'on détermine le courant massique de gaz d'échappement en fonction d'un état de fonctionnement instantané d'un moteur à combustion interne (1), en combinaison avec lequel le système de post-traitement des gaz d'échappement (3) fonctionne, en fonction d'une grandeur de perte de pression sur ledit au moins un élément de post-traitement des gaz d'échappement (7), et/ou en fonction d'une grandeur de perte de pression sur au moins un élément de réglage (13, 13') du dispositif de réglage (11).

5. Système de post-traitement des gaz d'échappement (3), avec
- au moins élément de post-traitement des gaz d'échappement (7),
- un chemin de contournement (9) autour dudit au moins un élément de post-traitement des gaz d'échappement (7),
- un dispositif de réglage (11), configuré pour distribuer un courant massique de gaz d'échappement sur ledit au moins un élément de post-traitement des gaz d'échappement (7) d'une part et le chemin de contournement (9) d'autre part, et avec
- un dispositif de commande, qui présente un moyen de détermination (21) pour la détermination d'un apport d'énergie admissible dans ledit au moins un élément de post-traitement des gaz d'échappement (7), un moyen de détermination (23) pour la détermination d'un apport d'énergie instantané dans ledit au moins un élément de post-traitement des gaz d'échappement (7) et un moyen de commande (25) pour la commande du dispositif de réglage (11), dans lequel
- le dispositif de commande (19) est configuré pour commander le dispositif de réglage (11) en fonction de l'apport d'énergie admissible et de l'apport d'énergie instantané, dans lequel le moyen de détermination (23) est configuré pour déterminer comme grandeurs d'apport d'énergie caractérisant l'apport d'énergie instantané un courant massique de gaz d'échappement à travers ledit au moins un élément de post-traitement des gaz d'échappement (7) et une température des gaz d'échappement.

6. Système de post-traitement des gaz d'échappement (3) selon la revendication 5, **caractérisé en ce que** le système de post-traitement des gaz d'échappement (3) présente une multiplicité d'éléments de post-traitement des gaz d'échappement (7), dans lequel un chemin de contournement séparé (9) et un dispositif de réglage séparé (11) sont associés respectivement à au moins un premier élément de post-traitement des gaz d'échappement (7) et à au moins un deuxième élément de post-traitement des gaz d'échappement (7).

7. Système de post-traitement des gaz d'échappement (3) selon une des revendications 5 et 6, **caractérisé en ce que** le dispositif de réglage (11) présente exactement un élément de réglage (13, 13') pour la distribution du courant massique de gaz d'échappement, ou **en ce que** le dispositif de réglage (11) présente respectivement un élément de réglage (13, 13') dans le chemin de contournement (9) et en amont de l'élément de post-traitement de gaz d'échappement (7), dans lequel les éléments de réglage (13, 13') sont couplés l'un à l'autre de préférence à contre-courant.

8. Moteur à combustion interne (1), muni d'un système de post-traitement des gaz d'échappement (3) selon l'une quelconque des revendications 5 à 7.
